# EUROPEAN PATENT APPLICATION

(11) **EP 4 596 241 A1**
(43) Date of publication of application: **06.08.2025**
(21) Application number: 23872346.4
(22) Date of filing: 26.09.2023
(51) Int. Cl.: B32B 27/34, B32B 27/40

(54) **EASILY ADHESIVE POLYAMIDE FILM AND METHOD FOR PRODUCING SAME**

(30) Priority: 29.09.2022 JP 2022156908; 06.07.2023 JP 2023111461
(71) Applicant: Unitika Ltd., Osaka-shi, Osaka 541-8566 (JP)
(72) Inventor: KAJITA, Akito, Uji-shi, Kyoto 611-0021 (JP); KUROSAWA, Akiko, Uji-shi, Kyoto 611-0021 (JP)
(74) Representative: Müller-Boré & Partner Patentanwälte PartG mbB
(86) International application number: PCT/JP2023/034956
(87) International publication number: WO 2024/071123

(57) **Abstract**

[Problem to be solved] To provide a highly adhesive polyamide film that has high adhesion even after hot water treatment, while also having excellent blocking resistance, printability, transparency, etc.

[Solution] A polyamide film having a primer layer formed on at least one side of a polyamide base film, characterized in that (1) the primer layer contains polyurethane resin A that does not have a silanol group and polyurethane resin B that has a silanol group, and (2) the polyurethane resin A and the polyurethane resin B have different glass transition temperatures (Tg).

## Description

### [Technical field]

The present invention relates to a novel readily-adhesive polyamide film and its manufacturing method. In particular, the present invention relates to an readily-adhesive polyamide film and its manufacturing method that are suitable for use in packaging materials, electrical insulating materials, general industrial materials, or the like.

### [Background technology]

Biaxially stretched polyamide films are widely used as packaging films for packaging food and other items because they have excellent mechanical properties, optical properties, thermal properties, and barrier properties, as well as excellent abrasion resistance, impact resistance, and pinhole resistance. In these applications, various secondary processes are usually applied to the surface of the base film, such as coating with various coating agents, printing, vapor deposition, and lamination with other films. For this reason, attempts have been made to improve the adhesion between the base film and the covering produced by secondary processing by subjecting the base film to physical surface treatments such as corona discharge treatment and plasma treatment, or chemical surface treatments that use chemicals such as acids and alkalis to activate the film surface, thereby modifying the surface of the base film.

However, although physical surface treatments are relatively simple, the adhesion obtained is insufficient. Chemical surface treatments are complicated and have problems such as a worsening of the working environment.

When polyamide films are used for food packaging, a method is generally employed in which a sealant film is laminated after printing processing is performed as necessary. However, if the adhesive strength between the two films is weak, peeling between the base polyamide film and the sealant film, namely, a phenomenon known as delamination may occur when boiling or retorting to sterilize the contents.

In order to solve these problems, in addition to the above physical or chemical surface treatment methods, there is a method of forming an easily adhesive coating film (hereinafter referred to as a "primer layer") by applying a primer agent with adhesive activity to the base film. This method is widely used because it allows the primer components to be selected according to the type of top coat layer.

Water-based resins are often used as components of the primer layer in terms of workability, safety and cost. Among them, polyurethane resins, polyester resins, acrylic resins, etc. are used in particular to improve adhesion with coating layers, ink layers, vapor deposition layers, etc. as topcoat layers (Patent Documents 1 to 7).

Among these, for example, a method is known in which the surface characteristics of the coating film are improved and adhesion after hot water treatment is improved by controlling the thickness of the primer layer of an easy-to-adhere polyamide film, the physical properties of the polyurethane resin used as an easy-to-adhere coating agent, and the amount of volatile base components remaining in the primer layer (Patent Document 7). According to Patent Document 7, the total amount of volatile base components can be reduced by not including a curing agent (crosslinking agent) in the primer layer, which not only prevents a decrease in water resistance, but also increases safety when used in food packaging materials, etc.

### [Prior art documents]

### [Patent documents]

[Patent document 1] JP 2022-38956
[Patent document 2] JP 2020-121496
[Patent document 3] JP 2014-22080
[Patent document 4] JP 2000-26798
[Patent document 5] JP H3-55302
[Patent document 6] International Publication WO2008/75461
[Patent document 7] International Publication WO2010/110282

### [Summary of the invention]

### [Problem to be solved by the invention]

However, these conventional films need to be further improved in terms of blocking resistance. That is, when the film is handled in the form of a roll, a phenomenon called "blocking" in which the films stick to each other tends to occur. In particular, as disclosed in Patent Document **7, etc.,** when a curing agent is not contained in the primer layer, the phenomenon tends to be worse. In addition, when the other surface of the primer layer is subjected to a corona discharge treatment in order to use the film as an intermediate layer in a multi-layer laminate, blocking is more likely to occur, which can lead to processing problems. In this case, a method of adding a lubricant to the primer layer can be used to prevent blocking, but adding a large amount of lubricant increases the haze and may impair transparency, reducing print visibility.

In addition, there is still room for improvement in the printability of conventional films due to the primer layer. In product packages, a wide variety of printing methods are employed to express individuality as well as to appeal to the environment, demands for printed appearance become high. In this regard, there is also a problem of localized deterioration of print appearance caused by the coating film properties of the primer layer applied to conventional films, and there is also room for improvement in this point.

Furthermore, in recent years, with the aging of consumers and the progress of product diversification, there is an increasing demand for long-term storage of food packaging, and the need for hot water retort treatment in the sterilization or pasteurization process is also increasing. In addition, since the boiling treatment may be performed in an air-containing state, there is a demand for the ability to maintain high lamination strength even in harsh environments.

There is thus a demand for the development of materials that can maintain high adhesion even after hot water treatment such as boiling treatment and retort treatment, and that also have excellent blocking resistance, printability, transparency, or the like and in these respects, conventional films have room for further improvement.

Therefore, a main object of the present invention is to provide an easily adhesive polyamide film having excellent blocking resistance, printability, transparency, etc. while having high adhesion even after hot water treatment.

### [Means for solving the problem]

As a result of extensive research conducted by the inventors in consideration of the problems of the prior art, the inventors discovered that the above object can be achieved by forming a primer layer containing a specific component on a polyamide film, and thus completed the present invention.

That is, the present invention relates to the following easily adhesive polyamide film and its manufacturing method.
1. A highly adhesive polyamide film having a primer layer formed on at least one side of a polyamide base film, wherein
   (1) the primer layer contains polyurethane resin A having no silanol groups and polyurethane resin B having a silanol group,
   (2) the glass transition temperatures (Tg) of polyurethane resin A and the polyurethane resin B are different from each other.
2. The highly adhesive polyamide film according to the above 1,
   in which the glass transition temperature (Tg) of the polyurethane resin A is in the range of 5 to 50°C, and the glass transition temperature (Tg) of the polyurethane resin B is in the range of 60°C or higher.
3. The highly adhesive polyamide film according to the above 1,
   in which the polyurethane resin A is 25 to 80 parts by mass and the polyurethane B is 20 to 75 parts by mass when the total of the polyurethane resin A and the polyurethane resin B is 100 parts by mass.
4. The highly adhesive polyamide film according to the above 1,
   in which the polyurethane resin A has a film elongation of 300% or more and a tensile strength of 20 to 50 MPa, and the polyurethane resin B has a film elongation of 200% or more and a tensile strength of 40 to 60 MPa.
5. The highly adhesive polyamide film according to the above 1,
   in which the minimum/maximum area ratio (average area of the 20 smallest dots/average area of the 20 largest dots) is in the range of 0.8 to 1 when each area of 300 dots within 2.5 mm² region selected arbitrarily in the TD direction of a halftone print 50% gradation part printed on the primer layer is measured.
6. The highly adhesive polyamide film according to the above 1,
   in which the adhesion strength is 40 g/15 mm or less when the primer layers of the highly adhesive polyamide films are brought into contact with each other under a load of 10 kg for in an environment of 40°C for one week.
7. The highly adhesive polyamide film according to the above 1,
   in which the haze is 8% or less.
8. The highly adhesive polyamide film according to the above 1, which is a biaxially stretched film.
9. A laminate in which at least a laminating adhesive layer and a heat seal layer are laminated in this order on the primer layer of the highly adhesive polyamide film according to any one of the above 1 to 8, either directly or via a printed layer.
10. A method for producing a highly adhesive polyamide film, comprising:
   (1) a step of applying an aqueous coating agent containing a polyurethane resin A having no silanol groups and a polyurethane resin B having a silanol group to at least one surface of an unstretched polyamide base film; and
   (2) a step of biaxially stretching the polyamide film coated with the aqueous coating agent, followed by a heat treatment.
11. The production method according to the above 10, in which the biaxial stretching is simultaneous biaxial stretching.
12. A method for producing a highly adhesive polyamide film, comprising:
   (1) a step of uniaxially stretching an unstretched polyamide base film in a first direction;
   (2) a step of applying an aqueous coating agent containing a polyurethane resin A having no silanol groups and a polyurethane resin B having a silanol group to at least one side of the uniaxially stretched polyamide base film;
   (3) a step of uniaxially stretching the polyamide base film coated with the aqueous coating agent in a second direction perpendicular to the first direction, and then heat treating the polyamide base film.

### [Advantages of the Invention]

According to the present invention, it is possible to provide a highly adhesive polyamide film that has high adhesion even after hot water treatment, while also having excellent blocking resistance, printability, transparency, or the like.

In particular, the highly adhesive polyamide film of the present invention uses two specific polyurethane resins with different glass transition temperatures in the primer layer, so that even after hot water treatment, it is possible to achieve adhesion (lamination strength) equal to or greater than that before the treatment, and to exhibit excellent blocking resistance. As a result, it is possible to reduce an amount of lubricants, **etc.,** and it is also possible to provide a film with high transparency. Additionally, it is possible to maintain excellent adhesion performance even after hot water treatment such as boiling treatment, retort treatment, or the like.

The mechanism of action of using the above two types of polyurethane resins is not clear, but it is presumed that by using polyurethane resin B having a silanol group, the silanol groups react with each other during the drying and stretching process of the film to form a crosslinked structure, which allows the primer layer to be cured without a curing agent, resulting in improved blocking resistance. On the other hand, it is presumed that polyurethane resin A having no silanol groups does not form the above crosslinked structure, but it functions to improve printability while maintaining affinity with polyurethane resin B in the primer layer. In this way, by using two types of polyurethane resins in combination, it is thought that it is possible to exhibit excellent blocking resistance, printability, or the like while maintaining high adhesion even after hot water treatment.

The highly adhesive polyamide film of the present invention, which has such characteristics, can be suitably used, for example, as a packaging material, an electrical insulating material, a general industrial material, etc. It is particularly suitable for food packaging materials that are printed on the film and then subjected to boiling or retort treatment.

Furthermore, the highly adhesive polyamide film of the present invention has the advantage that it can be easily obtained by applying an aqueous coating agent containing a polyurethane resin to a polyamide film and drying it, and that the thickness can be easily controlled. As a result, the highly adhesive polyamide film of the present invention has excellent productivity and is industrially advantageous.

According to the manufacturing method of the present invention, by incorporating the step of forming a primer layer by applying an aqueous coating agent into the film manufacturing process, the coating agent can be dried simultaneously in the heat treatment process for the purpose of thermal fixing the polyamide film, thereby simplifying the process. Furthermore, the temperature conditions of the heat treatment process can be made higher than the heating conditions when the coating agent is applied to the film and then dried, after the crystallization and orientation of the molecules by biaxial stretching (hereinafter also referred to as "oriented crystallization") is completed. This is therefore advantageous in reducing the volatile base components in the primer layer. On the other hand, when a curing agent is added separately to the aqueous coating agent, a crosslinked structure is formed in a network-patterned shape when drying is performed in-line, and unevenness occurs locally in the primer layer starting from the curing point, which deteriorates the appearance of the print. In addition, if the primer layer contains only a polyurethane resin that does not contain a curing agent, blocking is likely to occur due to changes over time when stored in a roll after film formation. According to the present invention, by containing a polyurethane containing a silanol group at a specific blending ratio, water-resistant adhesion and improved print appearance can be achieved without impairing blocking properties.

### [Brief Description of the Drawings]

[Figure 1] A diagram showing an example of the layer structure of the highly adhesive polyamide film of the present invention.
[Figure 2] A diagram showing an example of the layer structure of the laminate of the present invention.
[Figure 3] A diagram showing an outline of the method for evaluating the printability of the film in Test Example **1.**

### [Embodiments of the invention]

### 1. Highly adhesive polyamide film

The highly adhesive polyamide film of the present invention (film of the present invention) is a polyamide film having a primer layer on at least one side of a polyamide base film, characterized in that
(1) the primer layer contains polyurethane resin A having no silanol groups and polyurethane resin B having a silanol group, and
(2) the glass transition temperatures (Tg) of the polyurethane resin A and the polyurethane resin B are different from each other.

In the present invention, a polyamide base film having a primer layer formed on at least one side of the polyamide base film and no other layers laminated thereon is referred to as the "film of the present invention", and a laminate including the film of the present invention and other layer laminated on one or both sides of the film is referred to as the "laminate" of the present invention.

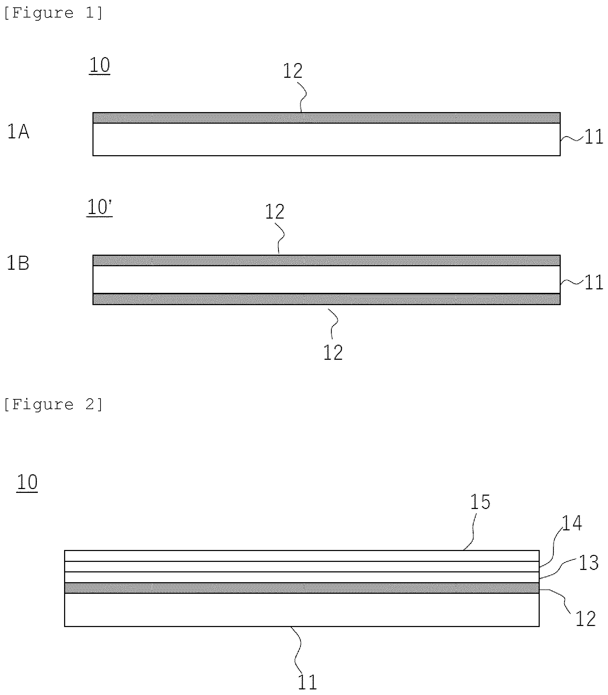

The basic layer structure of the film of the present invention is shown in Figure **1****.** In the film 10 of Figure 1A, a primer layer 12 is formed on a surface of one side of a polyamide base film 11. In Figure 1A, the primer layer 12 is formed on the entire surface of one surface of the polyamide base film 11, but it may be formed on a part of the surface in a range that does not substantially adversely affect the advantages of the present invention. In the film 10' of Figure 1B, a primer layer 12 is formed on both surfaces (front surface and back surface) of the polyamide base film 11. In Figure 1B, the primer layer 12 is formed on the entire surface of both surfaces of the polyamide base film 11, but it may be formed on a part of the surface as long as they do not substantially adversely affect the advantages of the present invention.

In both cases of Figure 1A and Figure 1B, a transparent film can be suitably used as the polyamide base film 11. Similarly, it is desirable that the primer layer 12 is also transparent. By forming the film of the present invention from these transparent layers, the haze value mentioned hereinafter can be more reliably achieved.

### Polyamide base film

The polyamide base film mainly contains polyamide resin, and functions as the core layer of the film of the present invention or the laminate described below.

An example of a polyamide resin can be nylon 6, which is obtained by ring-opening polymerization of a raw material containing ε-caprolactam. Other examples of polyamide resins include polyamide resins obtained by polycondensation of raw materials containing lactams with three or more ring members, ω-amino acids, dibasic acids and diamines, etc. The above raw materials are not limited, and for example, conventional petroleum-derived monomers, as well as monomers obtained by depolymerization through chemical recycling, can also be used.

Furthermore, the polyamide resin may be a remelted resin obtained by melting a polyamide resin. In the present invention, from the standpoint of environmental conservation and effective use of resources, waste resin of polyamide resin (particularly polyamide 6 resin) may be used as the remelted resin. More specifically, examples of the remelted resin include pellets produced by remelting and molding scraps generated during the production of polyamide film such as unstretched scraps, edge trimming scraps, slit scraps, and defective products.

Specific examples of such polyamide resins include at least one of nylon 6, 7, 10, 11, 12, 4.10, 5.6, 6.6, 6.9, 6.10, 6.11, 6.12, 10.10, 6T, 9T, 10T, 6I, MXD6 (poly(metaxylylene adipamide), 6/6.6, 6/12, 6/6T, 6/6I, 6/MXD6, or the like. Among these, nylon 6 is preferred because of its excellent balance between heat resistance and mechanical properties.

The content of polyamide resin in the polyamide base film is not limited, but can be usually set within the range of about 90 to about 100% by mass, and can be, for example, 95 to 99% by mass.

The polyamide base film may contain components other than polyamide resin, in a range that does not substantially adversely affect the advantages of the present invention. For example, at least one of various additives such as antioxidants, ultraviolet absorbers, preservatives, antistatic agents, antiblocking agents, inorganic fine particles, or the like can be added.

In particular, a lubricant may be blended for the purpose of further improving the slippery properties of the film. As the lubricant, at least one of inorganic lubricants and organic lubricants can be used. Examples of inorganic lubricants include clay, talc, calcium carbonate, magnesium carbonate, zinc carbonate, wollastonite, silica, alumina, calcium oxide, magnesium oxide, calcium silicate, sodium aluminate, calcium aluminate, magnesium aluminosilicate, glass balloons, carbon black, zinc oxide, antimony trioxide, zeolite, hydrotalcite, layered silicate, sodium silicate, aluminum hydroxide, iron oxide, zirconium oxide, barium sulfate, titanium oxide, and carbon black. Examples of organic lubricants include acrylic crosslinked polymers, styrene crosslinked polymers, phenolic resins, nylon resins, polyethylene wax, and ethylene bisstearic acid amide. Among these, silica is preferred.

The amount of lubricant contained in the polyamide base film is not particularly limited, but from the viewpoint of ensuring the transparency of the film, it is preferably 0.5% by mass or less, and more preferably 0.3% by mass or less in the polyamide base film. The lower limit can be, for example, 0.01% by mass, but is not limited thereto. In addition, when the film is used in an application that does not require transparency, the amount may exceed 0.5% by mass.

The polyamide base film may be composed of a single layer film, or a film formed of multiple layers by melt coextrusion, lamination, or the like. In particular, in the present invention, a polyamide base film formed of a single layer is preferable because it is easier to manufacture.

The polyamide base film may be a ready-made or commercially available polyamide film, or a film formed by a known film forming method.

In case of manufacturing a polyamide base film, for example, a molten polymer is extruded from a T-die and then cooled with a casting roll to produce an unstretched sheet. This is then simultaneously or sequentially biaxially stretched. The stretched film thus obtained is subjected to a short heat treatment at a temperature of, for example, about 200°C in order to improve the dimensional stability. In this way, a polyamide base film can be obtained. That is, the polyamide base film in the film of the present invention is preferably a biaxially stretched film.

The polyamide base film may be subjected to a surface treatment such as a corona discharge treatment, if necessary, within a range that does not impair the effect of the present invention.

The thickness of the polyamide base film is not limited and can be set appropriately depending on, for example, the application and the place of use, but it is usually set within the range of about 3 to about 50 µm.

### Primer layer

The primer layer is formed on one or both sides of the polyamide base film, and has the function of imparting excellent adhesion properties to the polyamide base film. The primer layer of the film of the present invention contains polyurethane resin A that does not have a silanol group and polyurethane resin B that has a silanol group. By including both polyurethane resin A and polyurethane resin B in the primer layer, it is possible to achieve lamination strength after hot water treatment that cannot be achieved with polyurethane resin A alone or polyurethane resin B alone, and furthermore it is possible to obtain good unti-blocking properties, printability, etc.

### Polyurethane resin A

Polyurethane resin A may be any resin that does not have a silanol group in the molecule. For example, a polyurethane resin obtained by reacting a compound containing at least two isocyanate groups in one molecule (hereinafter referred to as an "isocyanate group-containing compound") with a compound containing at least two active hydrogen groups in one molecule (hereinafter referred to as an "active hydrogen group-containing compound") can be used.

The above-mentioned isocyanate group-containing compound may be any of aliphatic diisocyanates, alicyclic diisocyanates, aromatic diisocyanates, and aromatic aliphatic diisocyanates and the like. These may be used alone or in combination of two or more kinds.

Aliphatic diisocyanates include, for example, trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, 2,6-diisocyanate methyl caproate, or mixtures thereof; alicyclic diisocyanates include, for example, 1,3-cyclopentane diisocyanate, 1,4-cyclohexane diisocyanate, 1,3-cyclohexane diisocyanate, 3-isocyanatemethyl-3,5,5-trimethylcyclohexyl isocyanate (isophorone diisocyanate), 4,4'-methylenebis(cyclohexyl isocyanate), methyl-2,4-cyclohexane diisocyanate, methyl-2,6-cyclohexane diisocyanate, 1,4-bis(isocyanatemethyl)cyclohexane or 1,3-bis(isocyanatemethyl)cyclohexane or mixtures thereof (hydrogenated xylylene diisocyanate), or mixtures thereof; aromatic diisocyanates include, for example, m-phenylene diisocyanate, p-phenylene diisocyanate, 4,4'-diphenyl diisocyanate, 1,5-naphthalene diisocyanate, 4,4'-diphenylmethane diisocyanate, 2,4- or 2,6-tolylene diisocyanate, or mixtures thereof, 4,4'-toluidine diisocyanate, dianisidine diisocyanate, 4,4'-diphenyl ether diisocyanate, and mixtures thereof; examples of the aromatic aliphatic diisocyanates include 1,3- or 1,4-xylylene diisocyanate, or mixtures thereof, ω,ω'-diisocyanate-1,4-diethylbenzene, 1,3- or 1,4-bis(1-isocyanate-1-methylethyl)benzene, or mixtures thereof; examples of the triisocyanate include, for example, triphenylmethane-4,4',4"-triisocyanate, 1,3,5-triisocyanate benzene, 2,4,6-triisocyanate toluene, 1,3,5-triisocyanate hexane, and the like; examples of the polyisocyanate monomer include 4,4'-diphenyldimethylmethane-2,2'-5,5'-tetraisocyanate, and the like; and the dimers or trimers derived from the above-mentioned polyisocyanate monomers.

Examples of the active hydrogen group-containing compound include compounds having an amino group, a hydroxyl group, or a mercapto group as a group having an active hydrogen group. From the standpoint of the reaction rate with the isocyanate group and the mechanical properties of the resulting coating, compounds having a hydroxyl group (particularly polyols) is preferred.

Examples of the compound having a hydroxyl group include polyester polyols, polyolefin polyols, polyether polyols, polyether ester polyols, polyester amide polyols, acrylic polyols, polycarbonate polyols, polyhydroxy alkanes, castor oil, polyurethane polyols, and mixtures thereof.

Examples of the polyester polyols include polyester polyols obtained by reacting dibasic acids such as terephthalic acid, isophthalic acid, adipic acid, azelaic acid, sebacic acid, or the like, or their dialkyl esters, or mixtures thereof, with glycols such as ethylene glycol, propylene glycol, diethylene glycol, butylene glycol, neopentyl glycol, 1,6-hexane glycol, 3-methyl-1,5-pentanediol, 3,3'-dimethylolheptane, polyoxyethylene glycol, polyoxypropylene glycol, polytetramethylene ether glycol, or mixtures thereof.

Examples of the polyolefin polyols include polyethylene polyol, polypropylene polyol, polyisobutene polyol, hydrogenated polyisoprene polyol, hydrogenated polybutadiene polyol, etc.

The polyether polyol may be, for example, a polyether polyol obtained by polymerizing an oxirane compound such as ethylene oxide, propylene oxide, butylene oxide, or tetrahydrofuran using water, or a low molecular weight polyol such as ethylene glycol, propylene glycol, trimethylolpropane, or glycerin as an initiator.

The above polyether ester polyol may be, for example, a polyether ester polyol obtained by reacting the dibasic acid or a dialkyl ester thereof, or a mixture thereof, with the polyether polyol. The polyester amide polyol may be, for example, a polyether amide polyol obtained by adding an aliphatic diamine having an amino group, such as ethylene diamine, propylene diamine, or hexamethylene diamine, as a raw material to the raw material of the polyesterification reaction product and reacting it during the polyesterification reaction.

Examples of the acrylic polyol include those obtained by copolymerizing a polymerizable monomer having one or more hydroxyl groups in one molecule, for example, such as hydroxyethyl (meth)acrylate, hydroxypropyl (meth)acrylate, hydroxybutyl (meth)acrylate, or the like, with (meth)acrylic acid or an ester thereof, for example. These can be used alone or in combination of two or more.

Examples of the polycarbonate polyol include those obtained by reacting at least one of ethylene glycol, propylene glycol, 1,3-propanediol, 1,4-butanediol, 1,5-pentanediol, 1,6-hexanediol, 3-methyl-1,5-pentanediol, 1,9-nonanediol, 1,8-nonanediol, neopentyl glycol, diethylene glycol, dipropylene glycol, 1,4-cyclohexanediol, 1,4-cyclohexanedimethanol, bisphenol A or hydrogenated bisphenol A with dimethyl carbonate, diphenyl carbonate, ethylene carbonate or phosgene. These may be used alone or in combination of two or more.

Examples of the polyhydroxyalkane include isoprene, butadiene, or liquid rubber obtained by copolymerizing butadiene with acrylamide, etc.

The polyurethane polyol may be, for example, a polyol having a urethane bond in one molecule, and examples of the polyol include those obtained by reacting a polyether polyol, polyester polyol, polyether ester polyol, or the like with an isocyanate group-containing compound having at least two isocyanate groups per molecule as described below so that the molar number (NCO group/OH group) is less than 1.

In addition to the above-mentioned compounds having hydroxyl groups, glycols such as ethylene glycol, propylene glycol, 1,3-propanediol, 1,4-butanediol, 1,5-pentanediol, 1,6-hexanediol, 1,9-nonanediol, 1,8-nonanediol, neopentyl glycol, diethylene glycol, dipropylene glycol, 1,4-cyclohexanediol, or 1,4-cyclohexanedimethanol etc.; low molecular weight polyols such as glycerin, trimethylolpropane, and pentaerythritol; and monools such as methanol, ethanol, propanols, butanols, 2-ethylhexanol, lauryl alcohol, or stearyl alcohol, etc. may be mixed. These may be used alone or in combination of two or more.

Furthermore, it is preferable that the polyurethane resin A in which an anionic functional group (hydrophilic group) is introduced into the polyurethane resin A. Examples of the anionic functional group include a carboxyl group, a sulfonic acid group, a phosphoric acid group, or the like. Methods for introducing anionic functional groups into polyurethane resins include a method using a diol having an anionic functional group as a polyol component, and a method using a diol having an anionic functional group as a chain extender, or the like. Examples of diols having anionic functional groups include aliphatic carboxylic acids such as glyceric acid, dioxymaleic acid, dioxyfumaric acid, tartaric acid, dimethylolpropionic acid, dimethylolbutanoic acid, 2,2-dimethylolvaleric acid, 2,2-dimethylolpentanoic acid, 4,4-di(hydroxyphenyl)valeric acid, and 4,4-di(hydroxyphenyl)butyric acid, and aromatic carboxylic acids such as 2,6-dioxybenzoic acid. These can be used alone or in combination of two or more.

The content of polyurethane resin A in the primer layer is not limited, but is usually about 15 to 75 mass%, preferably 15 to 70 mass%, and more preferably 20 to 60 mass%.

### Polyurethane resin B

Polyurethane resin B may contain at least one silanol group in the molecule. As the polyurethane resin B, a known or commercially available product can be used, and a product obtained by a known production method can also be used.

The site of the silanol group contained in polyurethane resin B is not particularly limited, and it may be present (bonded) at both ends, either end, or any site in the middle part of the polyurethane resin.

In addition, it is preferable that an anionic functional group (hydrophilic group) is introduced into polyurethane resin B. Examples of anionic functional groups include carboxyl groups, sulfonic acid groups, phosphoric acid groups, or the like. Methods for introducing anionic functional groups into polyurethane resin include a method using a diol having an anionic functional group as a polyol component, and a method using a diol having an anionic functional group as a chain extender, or the like. Examples of diols having an anionic functional group include aliphatic carboxylic acids such as glyceric acid, dioxymaleic acid, dioxyfumaric acid, tartaric acid, dimethylolpropionic acid, dimethylolbutanoic acid, 2,2-dimethylolvaleric acid, 2,2-dimethylolpentanoic acid, 4,4-di(hydroxyphenyl)valeric acid, and 4,4-di(hydroxyphenyl)butyric acid, and aromatic carboxylic acids such as 2,6-dioxybenzoic acid. These compounds may be used either individually or in combination of two or more thereof.

Polyurethane resin B includes, for example, a polyurethane resin in which a silanol group has been introduced into the molecule by reacting a polyurethane compound prepared by reacting an isocyanate group-containing compound with an active hydrogen group-containing compound with a compound containing at least one active hydrogen group and at least one hydrolyzable silicon group in one molecule (hereinafter referred to as a "hydrolyzable silicon group-containing compound").

Methods for introducing silanol groups include, as in the case of anionic functional groups, a method using a diol having a silanol group as a polyol component, a method using a diol having a silanol group as a chain extender, etc. Examples of diols having silanol groups include at least one of silanediol, 1,3-disiloxane-1,3-diol, diphenylsilanediol, etc.

The above isocyanate group-containing compound, active hydrogen group-containing compound, etc. can be the same as those explained for polyurethane resin A above.

The hydrolyzable silicon group-containing compound may be any compound containing at least one active hydrogen group and at least one hydrolyzable silicon group per molecule. Examples of hydrolyzable silicon groups include groups in which a hydrolyzable group that can be produced when hydrolysis is performed in the presence or absence of a silanol condensation catalyst is bonded to a silicon atom. Examples of hydrolyzable groups include at least one of hydrogen atoms, halogen atoms, alkoxy groups, acyloxy groups, ketoximate groups, amino groups, amide groups, aminooxy groups, mercapto groups, or alkenyloxy groups. Generally, 1 to 3 hydrolyzable groups may be bonded to one silicon atom.

Specific examples of hydrolyzable silicon group-containing compounds include compounds having a mercapto groups as an active hydrogen group and an alkoxy group as a hydrolyzable group such as at least one of γ-mercaptopropyltrimethoxysilane, γ-mercaptopropylmethyldimethoxysilane, γ-mercaptopropyltriethoxysilane, or γ-mercaptopropylmethyldiethoxysilane, etc. Examples of compounds having an amino group as an active hydrogen group and an alkoxy group as a hydrolyzable group, such as at least one of γ-(2-aminoethyl)aminopropyltrimethoxysilane, γ-(2-aminoethyl)aminopropyltriethoxysilane, γ-(2-aminoethyl)aminopropylmethyldimethoxysilane, γ-(2-aminoethyl)aminopropylmethyldiethoxysilane, γ-aminopropyltriethoxysilane, γ-aminopropylmethyldimethoxysilane, γ-aminopropylmethyldiethoxysilane, γ-aminopropyltrimethoxysilane, etc.

The content of polyurethane resin B in the primer layer is not particularly limited, but is usually about 15 to 75 mass%, preferably 15 to 70 mass%, and more preferably 20 to 60 mass%.

The ratio of polyurethane resin A to polyurethane resin B is not particularly limited, but when the total of the two is taken as 100 mass parts, polyurethane resin A can be 25 to 80 mass parts (preferably 30 to 80 mass parts, more preferably 40 to 80 mass parts, particularly preferably 55 to 80 mass parts, and most preferably 65 to 80 mass parts) and polyurethane resin B can be 20 to 75 mass parts (preferably 20 to 70 mass parts, more preferably 20 to 60 mass parts, particularly preferably 20 to 45 mass parts, and most preferably 20 to 35 mass parts). If the polyurethane resin A in the primer layer exceeds 80 mass parts, blocking resistance decreases when the highly adhesive polyamide film is handled in a roll form, which may cause problems. Furthermore, if the polyurethane resin B exceeds 75 parts by mass, it exceeds the optimum amount of silanol crosslinking structure, which may cause localized unevenness on the surface and deteriorate the appearance of the print. Furthermore, adhesion to processed products such as prints and adhesives applied to the primer layer may decrease.

In the present invention, polyurethane resin A and polyurethane resin B are used that have different glass transition temperatures (Tg) each other. Good blocking resistance, flexibility, etc. can be obtained in the temperature range between the respective glass transition temperatures (Tg). The glass transition temperature (Tg) of polyurethane resin A is usually preferably about 5 to 50°C. Among these, the lower limit of Tg of polyurethane resin A is usually preferably 5°C or higher, more preferably 10°C or higher, even more preferably 15°C or higher, and most preferably 20°C or higher. If Tg is less than 5°C, the blocking resistance of the wound roll film may decrease. Furthermore, if the Tg exceeds 50°C, the flexibility of the primer layer decreases, and the conformability deteriorates, which may impair the appearance of the polyamide film.

The glass transition temperature (Tg) of polyurethane resin B is usually preferably 60°C or higher, more preferably 70°C or higher, even more preferably 85°C or higher, and most preferably 100°C or higher. If the Tg is less than 60°C, the heat resistance of the entire primer layer may decrease, and blocking resistance may decrease. The upper limit of the Tg of polyurethane resin B can be set to, for example, about 120°C, but is not limited to this.

The polyurethane resins A and/or B used in the present invention preferably have a film elongation of 200% or higher. When the elongation of polyurethane resins A and B is less than 200%, the cohesive strength of the resin film is improved, but the flexibility and impact resistance of the film may decrease, and therefore the adhesion to the processed object may decrease after processing such as coating and printing on the primer layer.

The polyurethane resins A and/or B used in the present invention preferably have a tensile strength of 20 MPa or more, particularly preferably 25 MPa or more, and more preferably 30 MPa or more. When the tensile strength of the polyurethane resins A and B is less than 20 MPa, the adhesion to the processed object before hot water treatment after processing such as coating and printing on the primer layer is improved, but the heat resistance of the primer layer may decrease. Therefore, when processing such as coating and printing on the primer layer is performed, the adhesion to the processed object after hot water treatment is easily significantly impaired. In addition, the cohesive strength of the resin film may decrease, and the blocking resistance may decrease.

Taking all the above points into consideration, in the present invention, it is particularly preferred that the polyurethane resin A has a film elongation of 300% or more and a tensile strength of 20 to 50 MPa. It is also preferred that polyurethane resin B has a film elongation of 200% or more and a tensile strength of 40 to 60 MPa.

In the film of the present invention, other additives may be contained in the primer layer within a range that does not impair the profitable effects of the present invention. However, it is preferable that a small amount or no curing agent (crosslinking agent) is contained for the above reasons, so that the amount of the curing agent (crosslinking agent) is 0.1 mass% or less in the primer layer.

In particular, a lubricant can be blended to give the primer layer higher blocking resistance. For example, when the lubricant is particulate, a lubricant with an average particle diameter of 5 to 300 nm (particularly 10 to 200 nm) can be used. The amount of the lubricant is not limited, but it is usually in the range of 0 to 10 mass% in the primer layer. Accordingly, it can be, for example, 0.1 to 10% by mass, and from the viewpoint of improving antiblocking properties and transparency, it can be, for example, 0.1 to 5% by mass, preferably 0.3 to 3% by mass, and more preferably 0.5 to 2% by mass.

As the lubricant, at least one of organic lubricants and inorganic lubricants can be used. As the inorganic lubricant, at least one of clay, talc, calcium carbonate, magnesium carbonate, zinc carbonate, wollastonite, silica, alumina, calcium oxide, magnesium oxide, calcium silicate, sodium aluminate, calcium aluminate, magnesium aluminosilicate, glass balloon, carbon black, zinc oxide, antimony trioxide, zeolite, hydrotalcite, layered silicate, sodium silicate, aluminum hydroxide, iron oxide, zirconium oxide, barium sulfate, titanium oxide, or carbon black, etc. can be used. Examples of organic lubricants include at least one of acrylic crosslinked polymers, styrene crosslinked polymers, phenolic resins, nylon resins, polyethylene wax, or ethylene bisstearic acid amide, or the like.

In the film of the present invention, the total amount of volatile base components generated from the primer layer is preferably 0.50 ppm or less, and more preferably 0.20 ppm or less. If the volatile base components remain in the primer layer at more than 0.50 ppm, the water resistance of the primer layer may decrease, and when the primer layer is subjected to processing such as coating or printing, the adhesion to the processed product when wetted may decrease. In addition, the effect of increasing safety is likely to be hindered when the highly adhesive polyamide film is used as a packaging material for food, etc.

The thickness of the primer layer (thickness after stretching) is not limited, but can usually be about 0.025 to about 0.250 µm, and preferably 0.050 to 0.120 µm.If the thickness is less than 0.025 µm, it may be difficult to form a uniform, defect-free coating on the film. As a result, when the primer layer is subjected to processing such as coating or printing, the adhesion to the processed product after hot water treatment such as boiling or retorting may decrease. On the other hand, if the thickness exceeds 0.250 µm, the water resistance may deteriorate. In addition, since the terminal groups tend to bleed out to the surface layer, the blocking property may decrease and the amount of volatile base components remaining in the primer layer may increase. Furthermore, since further improvement in adhesion is minor, it may become economically inefficient.

The thickness of the film of the present invention is not particularly limited, but is usually about 3 to about 50 µm, and preferably 10 to 25 µm. The film of the present invention is preferably a stretched film, and more preferably a biaxially stretched film (a film oriented and crystallized along two axes).

The film of the present invention has excellent blocking resistance. Therefore, when the primer layers come into contact with each other under a load of 10 kg/cm in an environment at 40°C for a week, the adhesion strength is preferably 40 g/15 mm or less, more preferably 30 g/15 mm or less, even more preferably 20 g/15 mm or less, particularly preferably 15 g/15 mm or less, and most preferably 10 g/15 mm or less. Furthermore, when the primer layer comes into contact with the other surface of the primer layer under a load of 10 kg/cm in an environment at 40°C for one week, the adhesion strength is preferably 10 g/15 mm or less, more preferably 5 g/15 mm or less, and particularly preferably 3 g/15 mm or less. The lower limit of the blocking resistance is not particularly limited, but in any of the above cases, it is usually about 1 g/15 mm.

The film of the present invention also has excellent printability. Therefore, when each area of 300 dots within 2.5 mm² of a halftone printing 50% gradation part printed on the primer layer is measured at any 10 points in the TD direction of the printed film, the minimum area to maximum area ratio (average of 20 smallest areas/average of 20 largest areas) is preferably in the range of 0.8 to 1, more preferably in the range of 0.85 to 1, and most preferably in the range of 0.9 to 1. When the value is within such a range, printing unevenness can be reduced and a homogeneous printing state can be obtained.

The film of the present invention has good transparency and therefore good print visibility. In this case, the haze value of the film of the present invention is usually preferably 8% or less, more preferably 7% or less, and most preferably 6% or less. The lower limit of the haze is not particularly limited, but is usually about 1%. Since the film of the present invention has excellent blocking resistance as described above, a relatively small amount of lubricant is required even when it is used. This makes it possible to simultaneously achieve excellent blocking resistance and high transparency.

The highly adhesive polyamide film of the present invention has excellent adhesion to processed products, i.e., paints, inks, or the like, when various secondary processing such as painting and ink printing are performed on the surface of the primer layer, and also has excellent adhesion to sealant films due to the laminating adhesive layer, etc. Therefore, it can be used as a laminated product subjected to secondary processing such as lamination of a sealant film, and is highly useful as a base film for packaging, general industrial use, etc. In addition, it has excellent adhesion even after hot water processing such as boiling and retort processing, and has excellent printability, so it can be used preferably in the field of food packaging in particular.

### 2. Method for Producing highly adhesive Polyamide Film

The method for producing the film of the present invention is not limited to the above, but can be preferably carried out by the following first or second method.

### (A) First Method

The first method is a method for producing an easy-adhesion polyamide film, and the method includes:
(1) a step of applying an aqueous coating agent containing a polyurethane resin A that does not have a silanol group and a polyurethane resin B that has a silanol group to at least one side of an unstretched polyamide film (coating step); and
(2) a step of biaxially stretching the polyamide film to which the aqueous coating agent has been applied, and then heat treating the film (stretching step).

### Coating Step

In the coating step, an aqueous coating agent containing a polyurethane resin A that does not have a silanol group and a polyurethane resin B that has a silanol group is applied to at least one side of an unstretched polyamide film.

The unstretched polyamide film described above will ultimately become the polyamide base film of the film of the present invention. Therefore, the composition and the like can be those described in "1. Highly adhesive polyamide film" above. The unstretched polyamide film can be manufactured by forming a melt-kneaded product containing a polyamide resin into a sheet. The preparation of the melt-kneaded product itself can be carried out according to a known method. For example, raw materials containing a polyamide resin are fed into an extruder equipped with a heating device, and melted by heating to a predetermined temperature, and the melt-kneaded product is extruded through a T-die and cooled and solidified by a casting drum or the like to obtain an unstretched sheet as a sheet-shaped molded product. The average thickness of the unstretched sheet in this case can be appropriately set according to the final thickness and the like, and can be, for example, about 15 to about 250 µm, or can be, for example, about 50 to about 235 µm, but is not limited thereto.

The aqueous coating agent can be prepared by dispersing polyurethane resin A, polyurethane resin B, and the like in water. In particular, when the polyurethane resins A and B are anionic polyurethane resins, it is desirable to use a volatile base to disperse them in water. The volatile base is not particularly limited, and examples thereof include at least one of ammonia, methylamine, ethylamine, dimethylamine, diethylamine, triethylamine, morpholine, or ethanolamine. Among these, triethylamine is more preferable because it provides good liquid stability for the water-dispersed polyurethane resin and has a relatively low boiling point, so that the amount of triethylamine remaining in the primer layer is small.

In order to improve the applicability of the coating agent when it is applied to the base film, a surfactant may be added to the aqueous coating agent. Such a surfactant can promote the wetting of the aqueous coating agent to the base film. Examples of such surfactants include anionic surfactants such as polyethylene alkyl phenyl ether, polyoxyethylene fatty acid ester, glycerin fatty acid ester, fatty acid metal soap, alkyl sulfate, alkyl sulfonate, and alkyl sulfosuccinate, and nonionic surfactants such as acetylene glycol. These can be used alone or in combination of two or more. The content of the surfactant in the aqueous coating agent is not limited, but is preferably 0.01 to 1% by mass. If it exceeds 1% by mass, the surfactant may bleed out or remain in the primer layer, which may reduce the adhesion properties after hot water treatment such as boiling, retorting, or the like. For this reason, it is preferable that the surfactant used is one that volatilizes during heat treatment in the manufacturing process of the highly adhesive polyamide film.

As the aqueous coating agent, known or commercially available water-dispersible polyurethane resins (particularly anionic water-dispersible polyurethane resins) can also be used. Examples of the water-dispersible polyurethane resin A include those with the product names "HYDRAN ADS-110", "HYDRAN ADS-120", "HYDRAN KU-400SF", "HYDRAN HW-311", "HYDRAN HW-312B", "HYDRAN HW-333", "HYDRAN AP-20", "HYDRAN AP-201", "HYDRAN AP-80", "HYDRAN APX-101H", and "HYDRAN AP-60LM" (all manufactured by DIC Corporation), and those with the product name "SUPERFLEX 107 **M",** "Superflex 150", "Superflex 150HS", "Superflex 410", "Superflex 420NS", "Superflex 460", "Superflex 460S", "Superflex 700", "Superflex 750", and "Superflex 840" (all manufactured by Daiichi Kogyo Seiyaku Co., Ltd.), product names "Takelac W-6010", "Takelac W-6020", "Takelac W-511", and "Takelac W-5030" (all manufactured by Mitsui Chemicals, Inc.), and product names "NeoRez R9679", "NeoRez R9637", "NeoRez R966", and "NeoRez R972" (all manufactured by DSM). Examples of the water-dispersible polyurethane resin B include products with the names "Takelac WS-4000", "Takelac WS-4022", "Takelac WS-5000", "Takelac WS-5100" and "Takelac WS-6010" (all manufactured by Mitsui Chemicals, Inc.).

The solid content concentration of the polyurethane resin in the aqueous coating agent is not limited, and can be changed as appropriate, for example, depending on the specifications of the coating device and the drying/heating device. In this case, if the solution is too dilute, the drying process may take a long time. On the other hand, if the solid content concentration is too high, it is difficult to obtain a uniform coating agent, and there is a risk of the coating performance being impaired. From this perspective, it is usually preferable that the solid content concentration in the aqueous coating agent be in the range of about 3 mass% to about 35 mass%.

The method of applying the aqueous coating agent to the polyamide film is not particularly limited. For example, typical methods such as gravure roll coating, reverse roll coating, wire bar coating, air knife coating, or the like can be mentioned.

After applying the aqueous coating agent, a drying process can be carried out as necessary. The drying method can be either natural drying or heat drying, but a method of drying by heating at 100 to 180°C for example can be preferably employed.

### Stretching step

In the stretching step, the polyamide film coated with the aqueous coating agent is biaxially stretched and then heat-treated. More specifically, in the first method, an aqueous coating agent mainly containing an anionic water-dispersible polyurethane resin is applied to at least one side of an unstretched polyamide base film to form a coating film, and the unstretched polyamide film is biaxially stretched together with the coating film, and then heat-treated to biaxially orient the crystals of the polyamide film.

In the first method, simultaneous biaxial stretching can be suitably used as the stretching method. The stretching temperature is usually about 70 to about 250°C, and preferably 100 to 230°C. The stretching ratio can be appropriately set depending on, for example, the application, the desired physical properties, etc., and can be, for example, about 2 to 4 times in the MD direction and about 2 to 4 times in the TD direction, but is not limited to these.

After stretching, heat treatment is performed. For example, a film stretched with both ends in the width direction held can be suitably heat-treated (i.e., heat-set) while both ends in the width direction are still held.

In the manufacturing method of the present invention, the heat-setting temperature is usually preferably 180 to 250°C, and more preferably 210 to 230°C. If the heat-setting temperature is less than 180°C, the thermal dimensional stability of the stretched oriented film may be high, and the amount of volatile base components remaining in the primer layer may be large. For this reason, the adhesion when water is applied between the primer and processed coat formed by processing such as coating or printing, which is an object of the present invention, is likely to decrease. In addition, if the heat-setting temperature exceeds 250°C, the temperature will be higher than the melting point of the polyamide resin, and the desired stretched film may not be obtained.

### (B) Second Method

The second method is a method for producing an easily adhesive polyamide film, and includes the steps of:
(1) a step of uniaxially stretching an unstretched polyamide film in a first direction (first stretching step);
(2) a step of applying an aqueous coating agent containing a polyurethane resin A that does not have silanol groups and a polyurethane resin B that has a silanol group to at least one side of the uniaxially stretched polyamide film (coating step);
(3) a step of uniaxially stretching the polyamide film coated with the aqueous coating agent in a second direction perpendicular to the first direction, and then heat treating the polyamide film (second stretching step).

### First Stretching Step

In the first stretching step, an unstretched polyamide film is uniaxially stretched in a first direction. More specifically, the unstretched polyamide film is stretched in the first direction by passing it through a group of rollers heated to 45 to 80°C (preferably 50 to 60°C) and having different peripheral speeds. The stretching ratio in this case can be appropriately set depending on, for example, the application and the desired properties, and can be, for example, 2 to 4 times in the MD or TD direction, but is not limited thereto. The unstretched polyamide film will ultimately become the polyamide base film of the present invention. Therefore, the composition thereof can be the same as that described above. The unstretched polyamide film can be produced in the same manner as in the first method.

### Coating step

In the coating step, an aqueous coating agent containing a polyurethane resin A having no silanol groups and a polyurethane resin B having a silanol group is applied to at least one side of the uniaxially stretched polyamide film. The aqueous coating agent and coating conditions can be the same as in the first method.

### Second stretching step

In the second stretching step, the polyamide base film coated with the aqueous coating agent is uniaxially stretched in a second direction perpendicular to the first direction, and then heat-treated.

The film is held at both ends in the width direction and stretched in the second direction at a temperature of 70 to 150°C (preferably 80 to 120°C). The stretching ratio in this case can be set appropriately depending on the application, desired properties, etc. and can be, for example, about 2 to 4 times in the TD direction or MD direction, but is not limited to this.

The stretching temperature of the sequential biaxial stretching method used in the second method is lower than that of the simultaneous biaxial stretching method in the first method because high-temperature stretching in the sequential biaxial stretching method increases the crystallinity of the polyamide film too much, making it impossible to stretch at the required ratio or significantly impairing the properties required for the polyamide film.

The film of the present invention obtained by the first or second method may be subjected to a surface treatment such as a corona discharge treatment or an easy-adhesion treatment, as long as the advantages of the present invention are not impaired. For example, an easy-adhesion layer, a barrier coat layer, a printing layer, or the like can be formed as necessary. In particular, by subjecting the other surface of the primer layer to a corona discharge treatment, the film is suitable for surface printing, and can also be suitably used as an intermediate layer of a multi-layer laminate.

### 3. Use of highly adhesive polyamide film

The film of the present invention (particularly the biaxially stretched film) obtained as described above has excellent mechanical properties such as tensile elongation, tensile strength, and elastic modulus of a polyamide resin film itself, as well as excellent transparency, color tone, wettability, printability, etc., and is therefore particularly suitable for use for a packaging material.

The film of the present invention can be used alone, or can be laminated with other layer to be used in the form of a laminate.

The above other layer is not limited, and may include, for example, a barrier layer, a printed layer, a laminate adhesive layer, a heat seal layer, a resin film, etc., as necessary. In particular, the present invention also encompasses a laminate (laminate of the present invention) in which at least a laminate adhesive layer and a heat seal layer are laminated in order on the primer layer of the film of the present invention, either directly or via a printed layer. For example, as shown in FIG. 2, a primer layer 12 is formed on one side of a polyamide base film 11, a printed layer 13 is laminated on the primer layer, and a laminate adhesive layer 14 and a heat seal layer 15 are formed on the printed layer. As the laminate adhesive layer or heat seal layer, for example, a resin layer containing a polyolefin such as polyethylene or polypropylene can be used. These may be publicly known or commercially available. In the present invention, the laminate of the present invention also encompasses a laminate in which the above laminate further includes another layer.

For example, a laminate may be a laminate in which the other surface of the primer layer of the film of the present invention is subjected to a corona discharge treatment, and an adhesive layer and a resin film are laminated in this order, either directly or via a printed layer. Specifically,
(a) polyester resin film/laminating adhesive layer/polyamide base film/primer layer/laminating adhesive layer/heat seal layer,
(b) polyester resin film/printed layer/laminating adhesive layer/polyamide base film/primer layer/laminating adhesive layer/heat seal layer,
(c) polyester resin film/laminating adhesive layer/polyamide base film/primer layer/printed layer/laminating adhesive layer/heat seal layer,
(d) polyamide resin film/laminating adhesive layer/polyamide base film/primer layer/laminating adhesive layer/heat seal layer,
(e) polyamide resin film/printed layer/laminating adhesive layer/polyamide base film/primer layer/laminating adhesive layer/heat seal layer,
(f) polypropylene resin film/laminate adhesive layer/polyamide base film/primer layer/laminate adhesive layer/heat seal layer,
(g) polypropylene resin film/printed layer/laminate adhesive layer/polyamide base film/primer layer/laminate adhesive layer/heat seal layer,
(h) polypropylene resin film/laminate adhesive layer/polyamide base film/primer layer/printed layer/laminate adhesive layer/heat seal layer, **etc.,**
but are not limited to these. Among these examples, "polyamide base film/primer layer" corresponds to the film of the present invention. Specific examples of each layer are shown below.

The barrier layer is, for example, a layer for blocking air, moisture, etc. As the barrier layer, for example, aluminum foil, a vapor deposition layer of silicon oxide, aluminum etc., polyvinylidene chloride (PVDC) coating, polycarboxylic acids, a hydrogen-bonding resin-inorganic layered compound composite layer, etc. can be used.

The printed layer is, for example, a layer on which characters, designs, etc. are printed. The ink used to form the printed layer is not particularly limited. For example, toluene-containing ink, non-toluene ink, water-based ink, etc. can be used. From an environmental perspective, at least one of non-toluene ink, water-based ink, etc. is preferable.

As an adhesive to form the laminate adhesive layer, a publicly known or commercially available adhesive can be used. For example, isocyanate-based, polyurethane-based, polyester-based, polyethyleneimine-based, polybutadiene-based, polyolefin-based, alkyl titanate-based adhesives, or the like can be employed. Among them, at least one of isocyanate-based, polyurethane-based, polyester-based, etc. is preferable from the viewpoint of adhesion, heat resistance, water resistance, etc.

The heat seal layer is not particularly limited as long as it has heat sealability, and at least one of low density polyethylene, linear low density polyethylene, high density polyethylene, ethylene-vinyl acetate copolymer, polypropylene, or ionomer resin, etc. can be used.

The resin film is not limited, but at least one of polyester resin film, polyamide resin film, or polypropylene resin film, etc. can be used.

The laminate of the present invention can be produced by a method including a step of laminating a laminate adhesive layer or a heat seal layer on a primer layer or a printed layer formed thereon as necessary, using a known method such as a dry lamination method or an extrusion lamination method.

The laminate of the present invention can also be used as a packaging bag (bag body), for example, by heat-sealing laminate adhesive layers or heat seal layers facing each other. As the bag body, any form such as a two-sided bag, a three-sided bag, a palm-shaped bag, a gusset bag, a side-sealed bag, a stand-up bag, a stand-up zipper bag, etc. can be used.

The packaged item (content) is not limited, and can be used widely as a packaging material for foods and beverages, medicines, cosmetics, chemicals, miscellaneous goods, etc.

In the laminate of the present invention, regardless of the presence or absence of a printed layer, the laminate strength (X) of the primer layer when wetted as a normal water condition before after hot water treatment is preferably 3.0 N/cm or more, more preferably 3.5 N/cm or more, even more preferably 4.0 N/cm or more, particularly preferably 4.5 N/cm or more, and most preferably 5.0 N/cm or more. Furthermore, the ratio (Y/X) of the laminate strength (Y) when wetted after hot water treatment at 120°C for 30 minutes to the laminate strength (X) when wetted as a normal water condition is preferably 0.5 or more. The ratio (Y/X) is preferably 0.6 or more, more preferably 0.7 or more, even more preferably 0.8 or more, and most preferably 0.9 or more. If the ratio (Y/X) is less than 0.5, for example, when a packaging bag is formed from the laminate, filled with contents, sealed, and then treated with hot water, bag breakage, opening defects, etc. are likely to occur.

### [Examples]

The following examples and comparative examples are presented to more specifically explain the features of the present invention. However, the scope of the present invention is not limited to the examples. The urethane emulsions (water-dispersed polyurethane resins) used in the examples and comparative examples are all anionic polyurethane water dispersions.

### 1. Polyurethane resins used in the examples and comparative examples

### <Polyurethane resin A without silanol groups>

- AP-201: Water-dispersible polyurethane resin "Hydran AP-201" manufactured by DIC Corporation
- AP-80: Water-dispersible polyurethane resin "Hydran AP-80" manufactured by DIC Corporation
- Polyurethane resin A-1: Polyurethane resin obtained by the following method

166.1 parts by mass of terephthalic acid, 36.5 parts by mass of adipic acid, 46.6 parts by mass of ethylene glycol, 67.6 parts by mass of 1,4-butanediol, and 0.1 parts by mass of dibutyltin oxide were charged into a reaction vessel equipped with a thermometer, a nitrogen gas inlet tube and a stirrer while introducing nitrogen gas, and the mixture was subjected to a polycondensation reaction at 230°C for 6 hours until the acid value was 1 or less, to obtain a polyester polyol with a number average molecular weight of 1500, an acid value of 0.1, and a hydroxyl value of 72.9.

300 parts by mass of the obtained polyester polyol were dehydrated by heating at 100°C under reduced pressure. Next, 144.2 parts by mass of methyl ethyl ketone were supplied to the reaction vessel adjusted to 80°C, and then 26.8 parts by mass of 2,2-dimethylolpropionic acid and 18.0 parts by mass of 1,4-butanediol, and further 104.5 parts by mass of tolylene diisocyanate were supplied to the reaction vessel, and the mixture was reacted at 75°C for 8 hours. Next, 20.2 parts by mass of triethylamine were added to the reaction vessel adjusted to 50°C for neutralization, and then 300 parts by mass of water were supplied and mixed. The mixture obtained above was subjected to reduced pressure to remove methyl ethyl ketone, and water was then supplied to obtain polyurethane resin A-1 with a solid content concentration of 25% by mass.

### • Polyurethane resin A-2: Polyurethane resin obtained by the following method

Polyurethane resin A-2 was obtained in the same manner as polyurethane resin A-1, except that 166.1 parts by mass of terephthalic acid and 219.2 parts by mass of adipic acid were used.

### • Polyurethane resin A-3: Polyurethane resin obtained by the following method

120.97 parts by mass of methyl ethyl ketone was supplied to the reaction vessel equipped with a thermometer, a nitrogen gas inlet tube and a stirrer while introducing nitrogen gas to bring the temperature to 70°C, and 26.8 parts by mass of 2,2-dimethylolpropionic acid, 106.4 parts by mass of 1,6-hexanediol, 13.4 parts by mass of trimethylolpropane and 319.9 parts by mass of metaxylylene diisocyanate were supplied and reacted at 70°C, and it was confirmed that the reaction liquid reached the specified amine equivalent. Next, 20.2 parts by mass of triethylamine was added to the reaction vessel adjusted to 35°C. Next, 1440 parts by mass of water was added to a reaction vessel equipped with a homodisper capable of high-speed stirring, and the temperature was adjusted to 15°C while stirring and mixing at 2000 min⁻¹, the mixture obtained above was added and dispersed in water, and an amine aqueous solution obtained by mixing 41.7 parts by mass of 2-[(2-aminoethyl)amino]ethanol and 180 parts by mass of water was added to carry out a chain extension reaction. After that, a portion of the water and methyl ethyl ketone were removed under reduced pressure to obtain polyurethane resin A-3 with a solid content concentration of 25% by mass.

### <Polyurethane resin B with silanol groups>

- WS-4022: "Takelac WS-4022" manufactured by Mitsui Chemicals, Inc.
- WS-5000: "Takelac WS-5000" manufactured by Mitsui Chemicals, Inc.
- Polyurethane resin B-1: Polyurethane resin obtained by the following method

Polyurethane resin B-1 was obtained in the same manner as polyurethane resin A-3 above, except that an amine aqueous solution obtained by mixing 4.4 parts by mass of N-2-(aminoethyl)-3-aminopropyltrimethoxysilane and 18 parts by mass of water was added during the chain extension reaction.

### 2. Examples and Comparative Examples

### [Example 1]

### (1) Preparation of aqueous coating agent (aqueous dispersion)

Water-dispersible polyurethane resin "Hydran AP-201" manufactured by DIC Corporation and "Takelac WS-4022" manufactured by Mitsui Chemicals, Inc. were mixed in a ratio of 1:1 (mass ratio of solid content), and silica particles having an average particle diameter of 12 nm were further added so that the content was 0.25 mass% of the total, and the mixture was diluted with ion-exchanged water to prepare an aqueous coating agent having a solid content of 10 mass%.

### (2) Preparation of unstretched polyamide film

Nylon 6 (relative viscosity: 3.03) containing 0.1% by mass of silica with an average particle diameter of 1.0 µm was extruded into a sheet from a T-die extruder (75 mm diameter, L/D = 45, gentle compression type single screw) at 270°C, and then the sheet was placed on a casting roll with the surface temperature adjusted to 18°C and rapidly cooled to obtain an unstretched polyamide film with a thickness of 150 µm. This unstretched polyamide film was introduced into a water tank and adjusted to a water absorption rate of 4.0% by mass.

### (3) Preparation of highly adhesive polyamide film

The above-mentioned aqueous coating agent was applied to the water-absorbed unstretched polyamide film by air knife coating method, and then it was dried in a dryer at 60°C for 10 seconds. The coated unstretched film was introduced into a simultaneous biaxial stretching machine and simultaneously biaxially stretched 3.3 times in the longitudinal direction and 3.0 times in the transverse direction under the conditions of a preheating temperature of 225°C, a preheating time of 5 seconds, a stretching temperature of 195°C, and a stretching time of 3 seconds. Next, a heat treatment was performed under the conditions of a heat setting temperature of 215°C and a heat setting time of 5 seconds to produce a highly adhesive polyamide film. The thickness of the polyamide base film in the obtained highly adhesive polyamide film was 15 µm, and the thickness of the primer layer was 0.060 µm.

### [Examples 2 to 4]

Highly adhesive polyamide films were produced in the same manner as in Example 1, except that the mixing ratio of the aqueous polyurethane resin used in the aqueous coating agent was changed as shown in Table 1.

### [Example 5]

A highly adhesive polyamide film was produced in the same manner as in Example 1, except that the mixing ratio of the aqueous polyurethane resin used in the aqueous coating agent was changed, and the average particle diameter and amount of the lubricant added to the aqueous coating agent was changed to 20 nm and 0.25 mass% as shown in Table 1.

### [Example 6]

A highly adhesive polyamide film was produced in the same manner as in Example 1, except that a polyamide resin was prepared with using a monomer as the polymerization raw material which is obtained by depolymerizing, as chemical recycling, film scraps or defective products generated during the production of polyamide 6 resin film and resin scraps (resin waste materials) containing oligomers generated during the polymerization of polyamide 6 resin.

### [Examples 7-9]

Highly adhesive polyamide films were produced in the same manner as in Example 1, except that the type of aqueous polyurethane resin (A) used in the aqueous coating agent was changed to "Hydran AP-80" manufactured by DIC Corporation, and the mixing ratio and amount of lubricant were changed as shown in Table 1.

### [Example 10]

A readily adhesive polyamide film was produced in the same manner as in Example 1, except that the type of aqueous polyurethane resin (B) used in the aqueous coating agent was changed to "Takelac WS-5000" manufactured by Mitsui Chemicals, Inc., and the mixing ratio was changed as shown in Table 1.

### [Examples 11-14]

Highly adhesive polyamide films were produced in the same manner as in Example 1, except that the type of aqueous polyurethane resin used in the aqueous coating agent was changed as shown in Table 1.

### [Example 15]

After producing a readily adhesive polyamide film in the same manner as in Example 1, a corona discharge treatment was performed on the other surface of the surface on which the primer layer was formed to produce a readily adhesive polyamide film.

### [Comparative Examples 1-11, 16, 18, 19]

Highly adhesive polyamide films were produced in the same manner as in Example 1, except that the aqueous polyurethane resin used in the aqueous coating agent, the average particle size of the lubricant, and the amount of lubricant added were changed as shown in Table 1.

### [Comparative Example 12]

A highly adhesive polyamide film was prepared in the same manner as in Example 1, except that the aqueous polyurethane resin used in the aqueous coating agent was changed to "Hydran AP-201" manufactured by DIC Corporation only, and a corona discharge treatment was applied to the other surface of the surface on which the primer layer was formed to produce the highly adhesive polyamide film.

### [Comparative Examples 13-14]

The aqueous polyurethane resin used in the aqueous coating was changed as shown in Table 1, and 4 parts by mass of a crosslinking agent carbodiimide (V-12-S, manufactured by Nisshinbo) was added per 100 parts by mass of polyurethane resin. Other than this, the average particle diameter and amount of the lubricant were changed as shown in Table 1, as in Example 1, and highly adhesive polyamide films were prepared in the same manner as in Example 1.

### [Comparative Example 15]

Hydran KU-400SF was used as the aqueous polyurethane resin for the aqueous coating agent, and 6 parts by mass of melamine (BECKAMINE APM manufactured by DIC Corporation) as a crosslinking agent was added to 100 parts by mass of polyurethane resin. Other than this, the average particle size and amount of the lubricant were changed as in Example 1 as shown in Table 1, and an easily adhesive polyamide film was produced in the same manner as in Example 1.

### [Comparative Example 17]

A polyamide film was produced in the same manner as in Example 1, except that no aqueous coating agent was used, and a polyamide film was produced with corona discharge treatment on one side.

### [Test Example 1]

The properties of the films obtained in Examples 1 to 15 and Comparative Examples 1 to 19 were investigated. The results are shown in Tables 1 to 2 along with the composition and properties of the aqueous coating agent (polyurethane resin) used to form the primer layer.

### (1) Polyurethane Resin

### (1-1) Tensile Strength (MPa) and Elongation (%)

Each polyurethane resin (dispersion) (Tables 1 to 2) used in the aqueous coating agent to form the primer layer was cast onto a glass plate, dried at room temperature (approximately 20°C) for 24 hours, and then heat-treated at 150°C for 10 minutes to produce a film with a thickness of 50 µm. The film was cut into strips with a width of 5 mm to prepare test pieces, and the tensile strength and elongation were measured using a tensile tester (AGS-100B manufactured by Shimadzu Corporation) at a tensile speed of 300 mm/min.

### (1-2) Glass transition temperature Tg (°C)

Using a differential scanning calorimeter (Diamond DSC) manufactured by PerkinElmer, 10 mg of the film used in (1-1) above was heated once to Tg+20°C at 20°C/min, cooled, and then heated again from -30°C to 250°C at a heating rate of 5°C/min in order to measure Tg. The midpoint between the start temperature at which the baseline of the secondary heating curve shifts and the end temperature was taken as the glass transition temperature.

### (2) Film

### (2-1) Wet tension (mN/m)

In accordance with Japanese Industrial Standard JIS K6768, the primer layer-formed surface of the highly adhesive polyamide film obtained in each Example and Comparative Example was measured using Wet Tension Test Mixture No. 36.0-54.0 (Fujifilm Wako Pure Chemical Industries, Ltd.).

### (2-2) Thickness of primer layer (µm)

Using a JEM-1230 TEM manufactured by JEOL Ltd., the highly adhesive polyamide films obtained in each Example and Comparative Example were cut to an appropriate size, immersed in an aqueous solution of phosphotungstic acid (PTA solution) for 3 hours, and then embedded in a visible light curing resin. 80nm thick pieces were taken with an ultramicrotome, and after 1H gas phase staining with RuO₄ solution, transmission measurements were performed at an acceleration voltage of 100 kV.

### (2-3) Haze

Using a haze meter "NDH4000" manufactured by Nippon Denshoku Co., Ltd., the center of the film in the TD direction was measured in accordance with Japanese Industrial Standard JIS K7136.

### (2-4) Blocking resistance

The highly adhesive polyamide films obtained in each Example and Comparative Example were cut into A4 size pieces, and (a) the primer layers were contacted each other or (b) the primer layer was contacted with the other side surface of the primer layer. The pieces were left for one week in an atmosphere of 40°C and 70% RH while a load of 10 kg/cm was applied. However, for Comparative Example 13, (a) the corona discharge treated surfaces were contacted each other together or (b) the corona discharge treated surface was contacted with the other side. The pieces were then cut into strips 15 mm wide, and the peeling force (g/15 mm) required to peel the two pieces was measured using a tensile tester (AGS-100B manufactured by Shimadzu Corporation) according to the T-type (90°) method at a tensile speed of 300 mm/min, and the result was used as an index of blocking resistance. The smaller the value, the better the blocking resistance.

### (2-5) Evaluation of half-tone printing

### [Printing process]

### (a) Printing ink 1

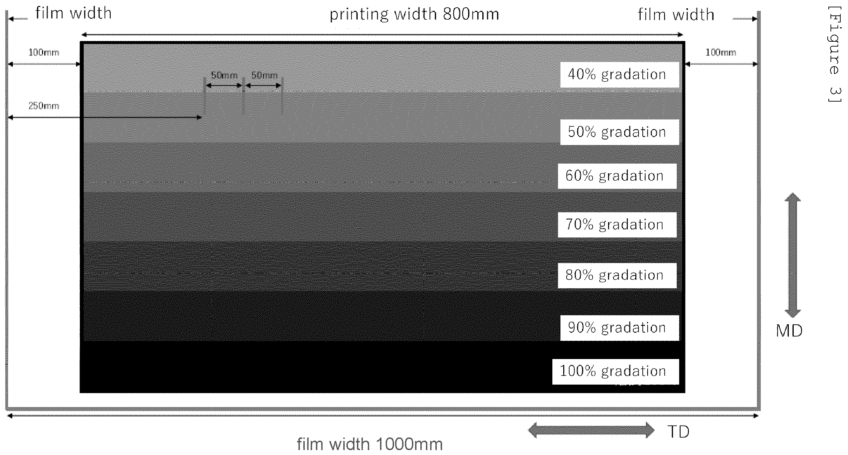

Rio Alpha R39 indigo (manufactured by TOYOINK) was mixed with diluent NKFS102 (manufactured by TOYOINK) and the viscosity (23°C) was adjusted to 15 seconds on Zahn cup #3. The film was slit at 500 mm left and right from the center respectively in the TD direction to prepare a printing roll film. The ink was applied to the primer layer of the film using a gravure printing cylinder, then dried at 50°C for 10 seconds and rolled up to produce a printed film as shown in Figure 3. However, for Comparative Example 14, the ink was applied to the corona discharge treated surface.

The cylinder was helioengraved with 175 lines (175 dots per inch) in the MD direction in the order of 40%, 50%, 60%, 70%, 80%, 90% and 100% gradation. The depth of each tone is 10.0 µm, 12.5 µm, 15.0 µm, 17.5 µm, 20.0 µm, 22.5 µm and 32.0 µm, respectively, the print length in the MD direction for each gradation is 60 mm, and the print width in the TD direction is 0.8 m.

Lio Alpha R39 Indigo is primarily composed of 10 mass% of pigment, 15 mass% of synthetic resin, 2.5 mass% of silica, 30 mass% of ethyl acetate, 15 mass% of isopropyl alcohol, 10 mass% of propyl acetate, 10 mass% of propylene glycol monomethyl ether and 5 mass% of n-propyl alcohol.

The diluent NKFS102 is primarily composed of 50 mass% of ethyl acetate, 35 mass% of propyl acetate, 10 mass% of isopropyl alcohol, and 5 mass% of n-propyl alcohol.

### (b) Printing ink 2

A printed film was produced in the same manner as above, except that Bellflora R Indigo 800MK (manufactured by Sakata Inx) which is an environmentally friendly ink containing plant-derived ingredients, and L Solvent 2 as a diluent (manufactured by Sakata Inx) were used as printing ink 2.

Bellflora R Indigo 800MK is primarily composed of 45 mass% of n-propyl acetate, 15 mass% of isopropyl alcohol, 7.5 mass% of ethyl acetate and 2.5 mass% of n-propyl alcohol.

L Solvent 2 is primarily composed of 40 mass% of toluene, 40 mass% of methyl ethyl ketone and 20 mass% of isopropyl alcohol.

### [Dot area evaluation]

The first measurement point was 250 mm from the edge of the 50% gradation part of the printed film made with the printing ink 1, and a total of 10 measurement points (squares with an area of 2.5 mm² and a side length of approximately 1.6 mm) were set at 50 mm intervals. A sample was taken of an observable size (for example, 20 mm in the MD direction x 50 mm in the TD direction centered on the measurement point), and observed at 50 times magnification using a stereo microscope (SteREO Discovery.V12 manufactured by ZEISS). The diameters of 300 dots within 2.5 mm² were measured using the analysis software in the microscope, and the area was calculated. If the dots were elliptical, the long and short sides were measured and the area was calculated as an ellipse. Of all the dot areas, the average of the smallest 20 dots/the average of the largest 20 dots was calculated. The larger the value (the closer to 1), the less uneven the printing.

### [Print appearance evaluation]

Each gradation part of the printed film was visually inspected and rated on a four-point scale according to the following criteria. For practical purposes, a rating of "△" to "⊚" is desirable.

### (Evaluation criteria)

⊚...Very good (All gradation parts are uniform in shade)
∘...Good (Printing unevenness is observed in some low gradation parts)
△...Slightly poor (All gradation parts are uneven in some areas)
×...Poor (All gradation parts are uneven overall)

### (2-6) Lamination strength of printed film

### [Lamination process]

A dry laminate adhesive for retort applications (product name "Dick Dry LX500/KR90S" manufactured by DIC Corporation) was applied to the printed layer of the printed film produced using the printing ink 1 or printing ink 2 in the above (2-5), which was then dried at 80°C for 10 seconds. The film was then dry laminated with an unstretched polypropylene film (product name "RXC-21" manufactured by Mitsui Chemicals Tohcello, thickness 50 µm) at a nip pressure of 490 kPa on a metal roll heated to 80°C, and aged for the recommended time to obtain a laminate film.

### [Lamination strength measurement]

A 15 mm wide test piece was cut out from the laminate film, and the end of the test piece was peeled off at the interface between the unstretched polypropylene film and the primer layer of the highly adhesive polyamide film, and then it was conditioned for 24 hours in an atmosphere of 23°C and 50% RH. In the same atmosphere, a tensile tester ("AGS-100B" manufactured by Shimadzu Corporation) was used to measure the peel strength at a tension speed of 300 mm/min according to the T-type (90°) method, and the measurement results were recorded as the laminate strength (unit: N/cm).

The laminate film thus produced was cut into A4 size pieces and made into bags, and the bags were filled with water, and retorted (120°C, 1.8 atm, 30 minutes). After that, samples were taken in the same manner as above, and the laminate strength was measured.

In this peel test, on the assumption that the contents would be filled with liquid based on the practical application, measurements were carried out while water-soaked absorbent cotton was contacted with the peel interface, and the wet laminate strength was measured with water attached to the peel interface.

In addition, for each laminate strength, the ratio (Y/X) of the laminate strength after treatment (Y) to the laminate strength before treatment (X) was calculated. The results are also shown in Table 2.

### (2-7) Air-containing boiling test

### [Lamination process]

A dry laminating adhesive (manufactured by Mitsui Chemicals, product name "Takelac A-620/Takenate A-65") was applied to a surface of the primer layer of the highly adhesive polyamide film obtained in each Example and Comparative Example, and then dried at 80°C for 10 seconds, and then dry-laminated with an unstretched polypropylene film (manufactured by Mitsui Chemicals Tohcello, product name "TUX (HC-E)", thickness 50 µm) on a metal roll heated to 80°C at a nip pressure of 490 kPa, and after aging for the recommended time, a laminate film was obtained.

### [Air-containing boiling test]

The laminate film thus prepared was sealed in three directions to form a bag with a size of 150 mm x 150 mm (seal width 10 mm) under the sealing conditions: upper portion temperature 150°C/lower portion temperature 100°C, pressure 0.3 MPa and time 1 second. The resulting bag was filled with 200 ml of water and 180 ml of air, and sealed with an impulse sealer. Ten bags of the air-containing packages were subjected to a boiling treatment at 95°C for 30 minutes, and the number of bags broken after the boiling process was counted and evaluated according to the following criteria. For practical purposes, an evaluation of "∘" or "⊚" is desirable.

### (Evaluation criteria)

- ⊚:: Very good (no breaks)
- ∘:: Fairly good (1 broken bag out of 10)
- △:: Fairly poor (2-4 broken bags out of 10)
- ×:: Poor (5 or more broken bags out of 10)

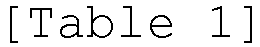

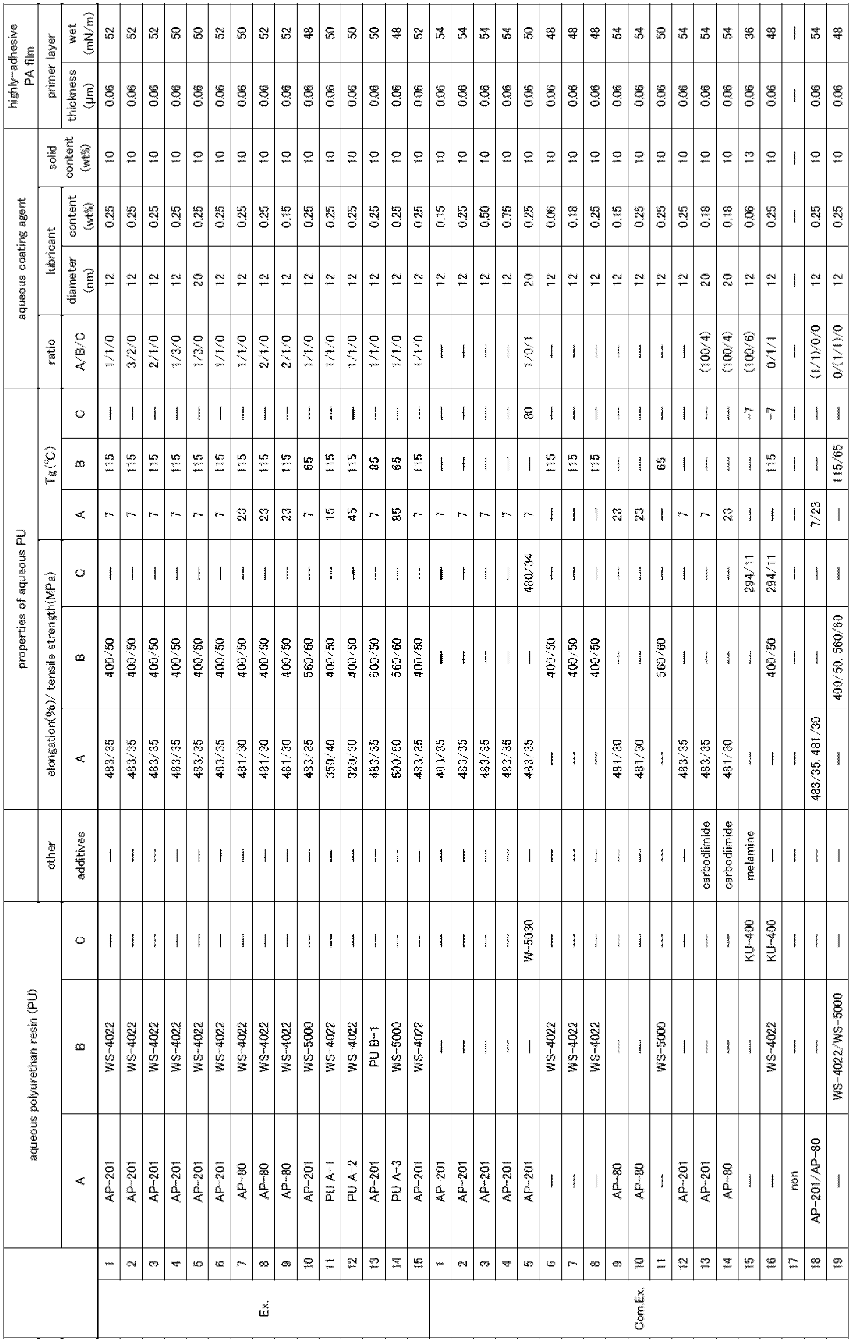

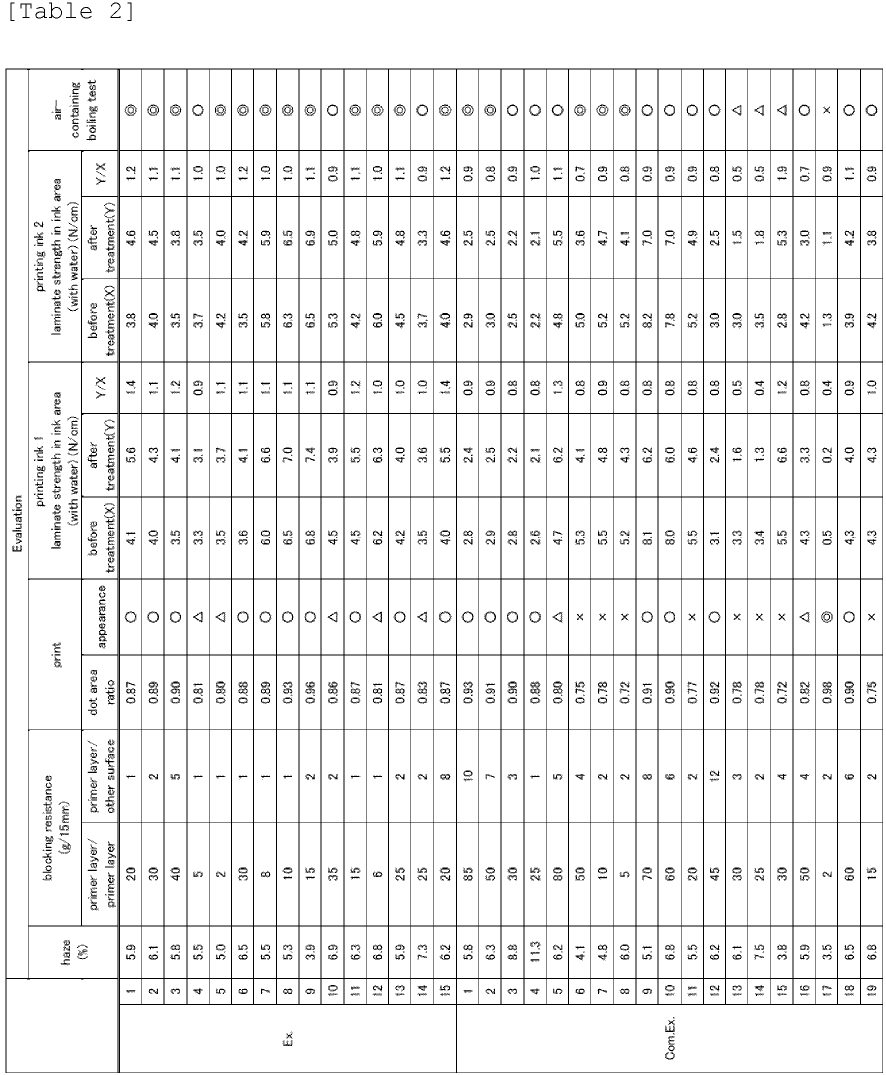

As is clear from the results in Tables 1 and 2, in Examples 1 to 10, the primer layer of the highly adhesive polyamide film contains an appropriate amount of polyurethane having a silanol group, and the laminate film has excellent transparency, little unevenness in the halftone dot area of halftone printing, and excellent blocking properties. In addition, the laminate film laminates using the highly adhesive polyamide films of Examples 1 to 9 have good lamination strength (X) when exposed to water at normal conditions, and the ratio (Y/X) of the lamination strength (Y) when exposed to water after hot water treatment to the lamination strength (X) when exposed to water at normal conditions is 0.9 or more, with some samples being 1.0 or more (i.e., the lamination strength after treatment is greater than before treatment), and the air-containing boil test was also good.

In Comparative Examples 1, 2, 5, 9, 10, and 12, the primer layer of the easy-adhesion polyamide film does not contain polyurethane with a silanol group, and although there were no problems with half-tone printing, blocking properties deteriorated.

In Comparative Examples 3 and 4, the primer layer of the easy-adhesion polyamide film does not contain polyurethane having a silanol group, and although there were no problems with blocking properties due to the increased amount of added lubricant, the haze value increased.

In Comparative Examples 6 to 8 and 19, the primer layer of the easy-adhesion polyamide film is composed only of polyurethane resin with a silanol group, but the half-tone dot area ratio for half-tone printing was less than 0.8, and the appearance of the print worsened.

In Comparative Examples 13 to 15, a crosslinking agent with a crosslinking structure other than silanol groups was added to the primer layer of the easy-adhesion polyamide film, so localized unevenness occurred on the surface starting from the crosslinking points during the coating drying and stretching steps, and the halftone dot area ratio was less than 0.8 when half-tone printing was performed, and the print appearance was deteriorated. In addition, the number of broken bags was somewhat high in the air-containing boil test.

In Comparative Example 16, the primer layer of the easy-adhesion polyamide film is composed of a polyurethane resin with silanol groups and a polyurethane resin without silanol groups, but the glass transition temperature of the polyurethane resin without silanol groups is low, and blocking resistance was deteriorated.

In Comparative Example 17, the polyamide film does not have a primer layer, so blocking resistance and half-tone printing were good, but the lamination strength was low and the number of broken bags was high in the air-containing boil test.

## Claims

1. A highly adhesive polyamide film having a primer layer formed on at least one side of a polyamide base film,
wherein
(1) the primer layer contains polyurethane resin A having no silanol groups and polyurethane resin B having a silanol group,
(2) the glass transition temperatures (Tg) of polyurethane resin A and the polyurethane resin B are different from each other.

2. The highly adhesive polyamide film according to claim 1,
in which the glass transition temperature (Tg) of the polyurethane resin A is in the range of 5 to 50°C, and the glass transition temperature (Tg) of the polyurethane resin B is in the range of 60°C or higher.

3. The highly adhesive polyamide film according to claim 1,
in which the polyurethane resin A is 25 to 80 parts by mass and the polyurethane B is 20 to 75 parts by mass when the total of the polyurethane resin A and the polyurethane resin B is 100 parts by mass.

4. The highly adhesive polyamide film according to claim 1,
in which the polyurethane resin A has a film elongation of 300% or more and a tensile strength of 20 to 50 MPa, and the polyurethane resin B has a film elongation of 200% or more and a tensile strength of 40 to 60 MPa.

5. The highly adhesive polyamide film according to claim 1,
in which the minimum/maximum area ratio (average area of the 20 smallest dots/average area of the 20 largest dots) is in the range of 0.8 to 1 when each area of 300 dots within 2.5 mm² region selected arbitrarily in the TD direction of a halftone print 50% gradation part printed on the primer layer is measured.

6. The highly adhesive polyamide film according to claim 1,
in which the adhesion strength is 40 g/15 mm or less when the primer layers of the highly adhesive polyamide films are brought into contact with each other under a load of 10 kg for in an environment of 40°C for one week.

7. The highly adhesive polyamide film according to claim 1, in which the haze is 8% or less.

8. The highly adhesive polyamide film according to claim 1, which is a biaxially stretched film.

9. A laminate in which at least a laminating adhesive layer and a heat seal layer are laminated in this order on the primer layer of the highly adhesive polyamide film according to any one of claims 1 to 8, either directly or via a printed layer.

10. A method for producing a highly adhesive polyamide film, comprising:
(1) a step of applying an aqueous coating agent containing a polyurethane resin A having no silanol groups and a polyurethane resin B having a silanol group to at least one surface of an unstretched polyamide base film; and
(2) a step of biaxially stretching the polyamide film coated with the aqueous coating agent, followed by a heat treatment.

11. The production method according to claim 10, in which the biaxial stretching is simultaneous biaxial stretching.

12. A method for producing a highly adhesive polyamide film, comprising:
(1) a step of uniaxially stretching an unstretched polyamide base film in a first direction;
(2) a step of applying an aqueous coating agent containing a polyurethane resin A having no silanol groups and a polyurethane resin B having a silanol group to at least one side of the uniaxially stretched polyamide base film;
(3) a step of uniaxially stretching the polyamide base film coated with the aqueous coating agent in a second direction perpendicular to the first direction, and then heat treating the polyamide base film.
